Europäisches Patentamt

**European Patent Office**

**Office européen des brevets**

(11) Veröffentlichungsnummer: **0 111 269**

**B1**

(12) **EUROPÄISCHE PATENTSCHRIFT**

(45) Veröffentlichungstag der Patentschrift:
15.10.86

(21) Anmeldenummer: **83112115.7**

(22) Anmeldetag: **02.12.83**

(51) Int. Cl.⁴: **A 47 J 37/12**

(54) Beheizbarer Küchenkessel, insbesondere Friteuse oder Wasserbad.

(30) Priorität: **03.12.82 DE 3244800**

(43) Veröffentlichungstag der Anmeldung:
**20.06.84 Patentblatt 84/25**

(45) Bekanntmachung des Hinweises auf die Patenterteilung:
**15.10.86 Patentblatt 86/42**

(84) Benannte Vertragsstaaten:
**AT BE CH FR GB LI NL SE**

(56) Entgegenhaltungen:
**CH-A-202 806**
**CH-A-353 867**
**DE-B-1 292 335**
**GB-A-1 564 972**
**US-A-3 066 102**

(73) Patentinhaber: **Patzner GmbH + Co., Buchener Strasse 15, D-6990 Bad Mergentheim (DE)**

(72) Erfinder: **Greiwe, Dieter, Lerchenweg 3, D-6973 Boxberg (DE)**

(74) Vertreter: **Reinländer, Claus, MEISSNER, BOLTE & PARTNER Widenmayerstrasse 48 Postfach 86 06 24, D-8000 München 86 (DE)**

EP 0 111 269 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft einen beheizbaren Küchenkessel, insbesondere eine Friteuse oder ein Wasserbad, nach dem Oberbegriff des Anspruchs 1.

Bei solchen bekannten Küchenkesseln, insbesondere Friteusen, wie sie in der DE-B-1292 335 beschrieben sind, dient die Schwenkbarkeit des Heizkörpers dazu, den Boden der Wanne freizugeben, damit dieser in einfacher Weise gründlich gereinigt werden kann. Bei einer bekannten Friteuse ist der Heizkörper um eine Achse schwenkbar, die am Oberteil der Wanne, d.h. oberhalb des oberen Rands der Wanne, an von dem Wannenrand nach oben vorstehenden Lagern gehalten wird. Im ausgeschwenkten Zustand steht somit der Heizkörper über der Wanne. Damit ist die Reinigung des Oberteils der Wanne behindert.

Der Erfindung liegt die Aufgabe zugrunde, einen beheizbaren Küchenkessel, insbesondere eine Friteuse oder ein Wasserbad, zu schaffen, deren/dessen Oberteil in einfacher Weise gereinigt werden kann.

Gelöst wird diese Aufgabe durch die Merkmale des Anspruchs 1. Weiterbildungen, der Erfindung sind in den Unteransprüchen angegeben.

Die erfindungsgemäße Ausbildung führt dazu, daß der Heizkörper im vom Boden der Wanne abgeschwenkten Zustand nicht oder nur geringfügig über den Rand der Wanne übersteht, das eigentliche Oberteil der Wanne, also der Bereich oberhalb des Wannenrands, frei bleibt, womit eine einfache Reinigung möglich wird, weil keine überstehenden Teile, sondern nur glatte Flächen vorhanden sind. Darüber hinaus hat der erfindungsgemäne Küchenkessel einen geringeren Platzbedarf.

Die Erfindung wird beispielhaft anhand der Zeichnung beschrieben, in der sind

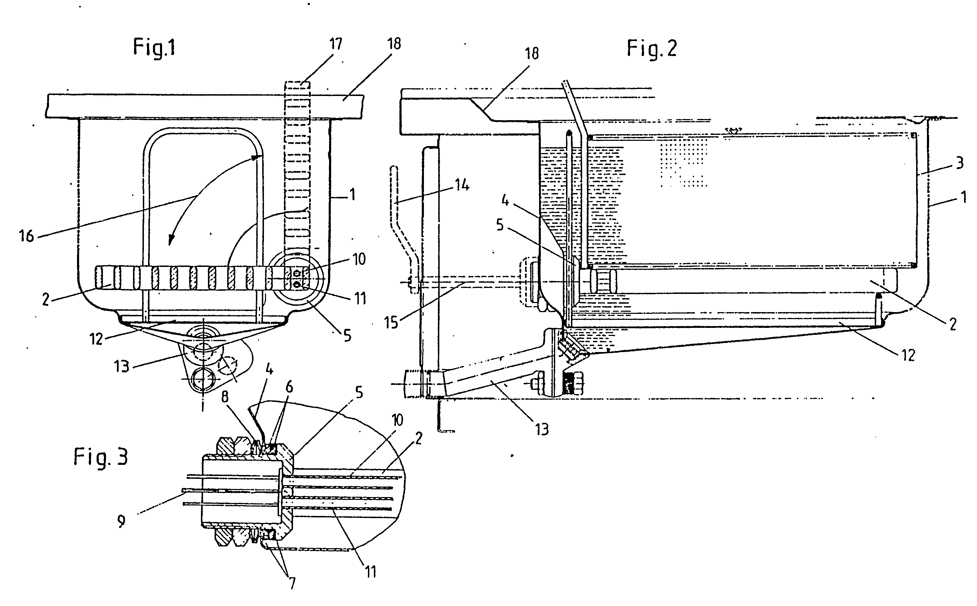

Fig. 1 ein Querschnitt durch eine Friteuse ohne Friteusenkorb,

Fig. 2 ein Längsschnitt durch die Friteuse mit Friteusenkorb und

Fig. 3 ein Schnitt durch das Schwenklager.

Die Friteuse weist eine Wanne 1 auf, in der im Betriebszustand kurz oberhalb des Bodens ein elektrischer Heizkörper 2 angeordnet ist. Im Betrieb liegt auf dem Heizkörper der Friteusenkorb 3 auf. Der Heizkörper 2 ist in der einen Seitenwand 4 der Wanne mittels eines Schwenklagers 5 gelagert, das Keramikscheiben 6 und Gleitringdichtungen 7, mit Vitoneinlage sowie Tellerfedern 8 enthält. Durch das Schwenklager laufen auch die elektrischen Zuleitungen 9 zu dem Heizkörper 2. An dem Lager sind ein Schutzrohr 10 für einen (nicht dargestellten) Arbeitsthermostat und ein Schutzrohr 11 für einen (nicht dargestellten) Kapazitätsbegrenzer angebracht. Am Boden ist die Wanne 1 mit einem Panadensieb 12 versehen, das mit einem Auslaß 13 verbunden ist. An dem Lager 5 ist ein Schwenkhebel 14 für den Heizkörper 2 angebracht. Mittels dieses Schwenkhebels wird der Heizkörper 2 um die Achse 15 aus der horizontalen Betriebslage am Boden der Wanne 1 in Richtung des Pfeils 16 in die strichliniert gezeichnete vertikale Lage 17 geschwenkt, in welcher der Boden der Wanne 1 gereinigt werden kann. Der obere Rand 18 der Wanne 1 ist frei von behindernden, insbesondere überstehenden Teilen, so daß auch der Oberteil der Friteuse in einfacher Weise gründlich gereinigt werden kann.

## Patentansprüche

1. Beheizbarer Küchenkessel, insbesondere Friteuse oder Wasserbad, mit einer Wanne (1) und mit einem am Boden der Wanne (15) angeordneten Heizkörper (2), der um eine horizontale Achse schwenkbar ist, <u>dadurch gekennzeichnet</u>, daß die Schwenkachse (75) in der Nähe des Bodens der Wanne (7) angeordnet ist.

2. Beheizbarer Küchenkessel nach Anspruch 1, dadurch gekennzeichnet, daß in einer Wand (4) der Wanne (1) ein Schwenklager (5) angebracht ist.

3. Beheizbarer Küchenkessel nach Anspruch 2, dadurch gekennzeichnet, daß das Schwenklager (5) Keramikscheiben (6), Gleitringdichtungen (7) und Tellerfedern (8) enthält.

4. Beheizbarer Küchenkessel nach einem der Ansprüche 1 bis 3, dadurch gekennzeichnet, daß der Heizkörper (2) ein an dem Schwenklager (5) angebrachtes Schutzrohr (10) für einen Thermostaten aufweist.

## Claims

1. A heatable cooking vessel, especially a deep-fat fryer or bain-marie, comprising a pan (1) and a heating element (2) which is bain-marie comprising a pan arranged at the base of the pan and is swivellable around a horizontal axis (15), characterized in that the swivel axis (15) is arranged near. the base of the pan (1).

2. A heatable cooking vessel according to claim 1, characterized in that a swivel bearing (5) is fitted in one wall (4) of the pan (1).

3. A heatable cooking vessel according to claim 2, characterized in that the swivel bearing (5) comprises ceramic disks (6), floating ring seals (7) and cup springs (8).

4. A heatable cooking vessel according to any one of claims 1 to 3, characterized in that the heating element (2) comprises a tube (10) for protecting a thermostat and attached to the swivel bearing (5).

## Revendications

1. Cuve de cuisson chauffée, friteuse ou sauteuse notamment dotée d'une cuve (1) et d'un élément chauffant (2), monté au fond de cette dernière et pivotant autour d'un axe (15) horizontal, caractérisée en ce que l'axe (15) se situe à proximité du fond de la cuve (1).

2. Cuve de cuisson chauffée selon la revendication 1, caractérisée par un support pivotant (5) monté sur une paroi (4) de la cuve (1).

3. Cuve de cuisson chauffée selon la revendication 2, caractérisée en ce que le support pivotant (5) comporte des rondelles céramique (6), des garnitures mécaniques d'étanchéité (7) et des ressorts à disques (8).

4. Cuve de cuisson chauffée selon une quelconque des revendications 1 à 3, caractérisée en ce que l'élément chauffant (2) présente un tube protecteur (10), prévu pour un thermostat et monté sur le support pivotant (5).

Fig.1

Fig.2

Fig.3

0 111 269